**Europäisches Patentamt**

**European Patent Office**

**Office européen des brevets**

(19)

(11) Numéro de publication: **0 121 634**
**B1**

(12) **FASCICULE DE BREVET EUROPEEN**

(45) Date de publication du fascicule du brevet:
**07.01.88**

(51) Int. Cl.⁴: **B 23 D 77/12**

(21) Numéro de dépôt: **83400717.1**

(22) Date de dépôt: **11.04.83**

(54) Alésoir convenant en particulier au perçage des matériaux composites.

(43) Date de publication de la demande:
**17.10.84 Bulletin 84/42**

(45) Mention de la délivrance du brevet:
**07.01.88 Bulletin 88/1**

(84) Etats contractants désignés:
**AT BE CH DE FR GB IT LI LU NL SE**

(56) Documents cités:
**DE - A - 2 627 258**
**US - A - 1 856 406**
**US - A - 2 439 968**
**US - A - 2 829 544**
**US - A - 2 965 144**
**US - A - 3 739 461**
**US - A - 3 824 027**
**US - A - 4 231 693**

(73) Titulaire: **AVIONS MARCEL DASSAULT-BREGUET AVIATION, 27, Rue du Professeur Victor Pauchet, F-92420 Vaucresson (FR)**

(72) Inventeur: **Herchin, Michel, 35, Rue de la République, F-94160 Saint-Mande (FR)**

(74) Mandataire: **de Boisse, Louis, CABINET DE BOISSE 37, Avenue Franklin D. Roosevelt, F-75008 Paris (FR)**

## Description

Les matériaux composites sont constitués par un ensemble de fibres de haute résistance et de haut module liées par une matrice qui peut être une résine organique ou un métal convenable. Les produits composites présentent des qualités spécifiques mécaniques exceptionnelles. Cependant de par sa constitution même le produit est anisotrope et non homogène, ce qui amène de grosses difficultés pour son usinage et en particulier pour le perçage.

La méthode classique de perçage consiste à faire un avant-trou de faible diamètre qui est agrandi par alésages successifs suivant la précision de cote et la qualité de l'état de surface imposées par la tenue mécanique. Cette méthode, appliquée aux matériaux composites avec les outils classiques, entraîne des défibrages et des arrachements de matrice de la paroi des trous et ces défauts ne peuvent être éliminés que par un grand nombre de passes d'outils convenables, très souvent réaffûtés. De ce fait, le prix de revient est élevé comparativement au prix du perçage des pièces métalliques.

La présente invention a pour objet un outil conçu pour assurer en une passe la finition de l'alésage à une cote à tolérance serrée, par exemple H8, en évitant tous risques de défibrage de la paroi du trou. L'avant-trou, s'il est suffisamment petit par rapport au diamètre nominal, peut être fait sans précaution spéciale car les quelques défibrages qu'il peut présenter seront totalement éliminés par passage de l'outil alésoir.

On connaît, par US-A 4 231 693, un outil de finition pour trous forés dans des matériaux durs, tels que du bronze phosphoreux, et qui comprend un corps cylindrique, une partie de tête, ou pilote, également cylindrique, de plus petit diamètre, et une partie conique qui se raccorde à la partie cylindrique de la tête, cet outil présentant une denture hélicoïdale dans ladite partie conique et une autre denture hélicoïdale en prolongement de la première et s'étendant jusque sur une partie du corps. Il est prévu, entre les deux dentures, un rentrant radial destiné à évacuer la chaleur. On aurait pu penser à utiliser un outil de ce genre, après adaptation, pour l'alésage de matériaux composites. En fait, la conception de cet outil, aux deux dentures distinctes, paraît inadaptée à ce problème car la discontinuité entre les dentures, si elle a une utilité contre l'échauffement, est défavorable en ce qui concerne les défibrages et arrachement de la matrice, dont le risque est aggravé par le fait que les dentures ont un pas à droite, et tendent donc à mordre dans le matériau, avec les dispositifs d'entraînement usuels.

Les mêmes remarques peuvent être faites à propos de l'outil décrit dans DE-A 2 627 258, qui comporte également, après une partie pilote, une partie de travail et une partie de finition, ces parties étant séparées par des gorges.

L'invention fournit une solution au problème indiqué plus haut, cette solution consistant en un alésoir à coupe rasante comportant un corps cylindrique, une partie de tête, ou pilote également cylindrique, lisse, et une partie conique qui se raccorde à la partie cylindrique de tête, l'alésoir présentant une denture hélicoïdale qui s'étend sur ladite partie conique et une denture hélicoïdale, en prolongement de la première et s'étendant sur une partie du corps, caractérisé en ce que les deux dentures se continuent sans aucune interruption depuis le pilote jusqu'à ladite partie du corps, la partie conique qui se raccorde à la partie cylindrique de tête se raccordant de la même façon au corps, et en ce que l'hélice de la denture a un pas à gauche.

La longueur de la partie conique doit être choisie en fonction du diamètre de la partie cylindrique, de manière que l'angle au sommet du cône reste petit, compris de préférence entre 4° et 10°, ce qui contribue à l'obtention d'un état de surface correct sur la paroi du trou à réaliser.

Sur la partie conique la dimension radiale des dents ou lèvres coupantes va en diminuant progressivement jusqu'au pilote dont le diamètre est égal ou supérieur au diamètre au sommet des dents à la jonction entre la partie conique et le pilote.

De plus sur cette partie conique la petite facette qui suit l'arête de coupe des dents a un angle de dépouille, angle d'ailleurs relativement petit, de préférence de l'ordre de 1°.

La fig. 1 montre en élévation, à une échelle voisine de l'échelle grandeur, un mode de réalisation d'un outil selon l'invention.

La fig. 2 montre à échelle considérablement amplifiée une coupe de la partie cylindrique selon II–II, vue dans le sens des flèches.

La fig. 3 est une coupe de la partie conique selon III–III, à même échelle.

Comme on le voit sur le dessin, l'alésoir se compose d'un corps de forme générale cylindro-conique. La portion active de ce corps comprend une tête cylindrique lisse 1, ou pilote, de petit diamètre, convenant pour le centrage de l'outil dans un avant-trou de la pièce à percer, et une partie 2 munie de dents ou lèvres coupantes 3. La surface primitive de cette partie 2 est un cylindre de même diamètre que la partie lisse 4 constituant le manche de l'outil ou la partie de fixation dans un manche ou support ad hoc.

La partie cylindrique dentée 2 et le pilote 1 sont raccordés par une partie conique 5 sur laquelle se prolongent, en diminuant progressivement de hauteur jusqu'au pilote 1, les dents ou lèvres coupantes 3. Le pilote 1 a un diamètre égal ou légèrement supérieur au diamètre au sommet des dents de la partie conique 5 à la jonction.

La longueur axiale de la partie conique 5 est déterminée de manière que l'angle au sommet du cône reste petit, ce qui contribue à assurer un état de surface correct dans le trou à percer. Si on désigne par $\alpha$ l'angle au sommet du cône, l la longueur axiale de la partie conique, D et d les diamètres de la partie cylindrique 2 et de la partie conique à sa jonction avec le pilote, on a

$$tg \frac{\alpha}{2} = \frac{D-d}{21}$$

Il convient d'adapter la longueur de la partie conique au diamètre, de manière que l'angle au sommet $\alpha$ reste de préférence compris entre 4 et 10°.

Cependant, pour limiter l'encombrement de l'outil du côté débouchant, il ne faut pas trop augmenter la longueur de la partie conique. Il y a donc un compromis à faire, compromis qui sera illustré dans l'exemple numérique donné ci-après.

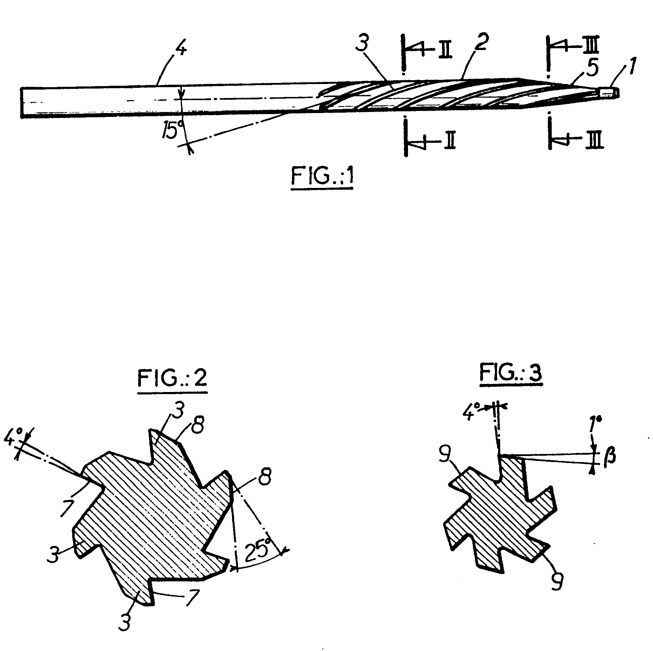

On voit sur les fig. 2 et 3 la forme des dents sur la partie cylindrique 2 et sur la partie conique 5. Sur ces figures sont indiqués l'angle de la face de coupe 7 des dents avec le rayon (4°) et l'angle d'inclinaison de la face de dépouille 8 par rapport à la tangente (25°) sans que ces indications soient cependant limitatives.

On remarque aussi que sur la partie conique la facette 9 des dents qui suit immédiatement l'arête de coupe a un petit angle $\beta$ de dépouille (1° environ), alors que ceci n'existe pas sure les dents de la partie cylindrique 2 qui présentent après l'arête de coupe une facette 9 perpendiculaire au rayon.

Le tableau ci-après donne des exemples, non limitatifs, de dimensions d'un outil convenant à l'obtention d'un alésage à la cote H8.

Dans ce tableau, D désigne le diamètre de la partie cylindrique 2, d le diamètre du pilote 1, l la longueur de la partie conique pour une longueur de pilote de 5 mm et une longueur totale de 70 mm entre l'origine de la partie cylindrique dentée et l'extrémité libre du pilote.

| D | d | l |
|---|---|---|
| 5 | 2,9 | 15 |
| 6 | 3,9 | 18 |
| 7 | 4,9 | 21 |
| 8 | 5,9 | 24 |
| 10 | 7,9 | 30 |

Pour la tenue à l'usure, il est préférable de fabriquer l'alésoir en carbure de tungstène monobloc migrograin.

Dans le cas de perçage simultané de pièces composites et de pièces en alliages d'aluminium le même outil peut être utilisé, mais pour les diamètres de trous supérieurs à 6 mm il est nécessaire de faire un alésage intermédiaire avec un alésoir de même type.

## Revendications

1. Alésoir à coupe rasante comportant un corps cylindrique (4), une partie de tête, ou pilote (1) également cylindrique, lisse, et une partie conique (5) qui se raccorde à la partie cylindrique de tête, l'alésoir présentant une denture hélicoïdale qui s'étend sur ladite partie conique et une denture hélicoïdale, en prolongement de la première et s'étendant sur une partie du corps (4), caractérisé en ce que les deux dentures se continuent sans aucune interruption depuis le pilote jusqu'à ladite partie du corps, la partie conique qui se raccorde à la partie cylindrique de tête se raccordant de la même façon au corps, et en ce que l'hélice des dentures a un pas à gauche.

2. Alésoir selon la revendication 1, caractérisé en ce que le diamètre du pilote est égal ou légèrement supérieur au diamètre au sommet des dents de la partie conique à l'endroit de la jonction de cette partie au pilote.

3. Alésoir selon l'une des revendications précédentes, caractérisé en ce que, sur les dents de la partie conique, une facette attenante à l'arête de coupe présente un angle de dépouille.

4. Alésoir selon la revendication 3, caractérisé en ce que l'angle de dépouille est de l'ordre de 1°.

5. Alésoir selon l'une des revendications précédentes, caractérisé en ce qu'il est un carbure de tungstène micro-grain.

6. Alésoir selon l'une des revendications précédentes, caractérisé en ce que la hauteur de la ou des dentures diminue progressivement sur la partie conique jusqu'au pilote.

## Patentansprüche

1. Schabeschnitt-Reibahle, mit einem zylindrischen Körper (4), einem ebenfalls zylindrischen, glatten Einführ- oder Kopfteil (1), und einem konischen Abschnitt (5), der sich an den zylindrischen Kopfteil anschliesst, ferner mit einer sich über den konischen Abschnitt erstreckenden Spiralverzahnung und einer diese fortsetzenden, sich über einen Teil des zylindrischen Körpers (4) erstreckenden (weiteren) Spiralverzahnung, dadurch gekennzeichnet, dass die beiden Verzahnungen von dem Kopfteil bis zu dem genannten Teil des zylindrischen Körpers ohne Unterbrechung verlaufen, wobei der an den zylindrischen Kopfteil anschliessende konische Abschnitt sich in gleicher Weise an den Körper anschliesst, und dass die Spiralverzahnungen linksgängig sind.

2. Reibahle nach Anspruch 1, dadurch gekennzeichnet, dass der Durchmesser des Einführ- oder Kopfteils gleich demjenigen Durchmesser oder geringfügig grösser als dieser ist, welchen die Verzahnungsspitzen des konischen Abschnitts im Bereich seiner Verbindung mit dem Kopfteil haben.

3. Reibahle nach einem der vorstehenden Ansprüche, dadurch gekennzeichnet, dass eine an die Schnittkante angrenzende Schliff-Fläche an der Zahnung des konischen Abschnitts einen Freiwinkel aufweist.

4. Reibahle nach Anspruch 3, dadurch gekennzeichnet, dass der Freiwinkel die Grössenordnung 1° hat.

5. Reibahle nach einem der vorstehenden Ansprüche, dadurch gekennzeichnet, dass sie aus feinstkörnigem Wolframkarbid besteht.

6. Reibahle nach einem der vorstehenden Ansprüche, dadurch gekennzeichnet, dass die Höhe der bzw. jeder Verzahnung von dem konischen Abschnitt zu dem Kopfteil hin fortschreitend abnimmt.

## Claims

1. A reamer with a shaving cut and comprising a cylindrical body (4), a smooth, also cylindrical head or pilot portion (1) and a tapering portion (5) which is connected to the cylindrical head portion, the reamer having a spiral tooth configuration which extends over said tapering portion and a spiral tooth configuration which prolongs the first tooth configuration and which extends over a portion of the body (4), characterised in that the two tooth configurations continue without any interruption from the pilot portion to said portion of the body, the tapering portion which is connected to the cylindrical head portion being connected in the same manner to the body, and that the spiral of the tooth configurations is of a left-hand pitch.

2. A reamer according to claim 1 characterised in that the diameter of the pilot portion is equal to or slightly greater than the diameter at the tips of the teeth of the tapering portion at the location of the junction of said portion with the pilot portion.

3. A reamer according to one of the preceding claims characterised in that, on the teeth of the tapering portion, a facet adjoining the cutting edge has a rake angle.

4. A reamer according to claim 3 characterised in that the rake angle is of the order of 1°.

5. A reamer according to one of the preceding claims characterised in that it is a micrograin tungsten carbide.

6. A reamer according to one of the preceding claims characterised in that the height of the tooth configuration or configurations progressively decreases over the conical portion to the pilot portion.

FIG.:1

FIG.:2

FIG.:3